# EUROPEAN PATENT APPLICATION

(11) **EP 4 589 507 A1**
(43) Date of publication of application: **23.07.2025**
(21) Application number: 24153070.8
(22) Date of filing: 22.01.2024
(51) Int. Cl.: G06Q 10/087, B65G 1/04, G06F 3/06

(54) **METHOD OF ENCODING/DECODING A CONFIGURATION**

(71) Applicant: AUTOSTORE TECHNOLOGY AS, 5578 Nedre Vats (NO)
(72) Inventor: STRØMME, Erik, 5578 Nedre Vats (NO)
(74) Representative: Kilburn & Strode LLP

(57) **Abstract**

The disclosure relates to a computer-implemented method for encoding a configuration of/for a storage grid of an automated storage and retrieval system, the method comprising: obtaining first and second raw configuration records corresponding to respective first and second cells of the storage grid and each including one or more respective parameters characterising the respective cell; based on the one or more parameters of the first raw configuration record matching the one or more parameters of the second raw configuration record, associating a cell type with the first and second cells; and creating for the first and second cells respective first and second encoded configuration records each indicative of the cell type.

## Description

### TECHNICAL FIELD

The disclosure relates to a method for encoding/decoding a configuration. More particularly, it relates to a computer-implemented method for encoding/decoding a configuration of a storage grid of an automated storage and retrieval system, and to a device and one or more computer-readable media for performing said method.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Designing a grid for an automated storage and retrieval system may involve processing a large amount of data describing its configuration. Similarly, visualising relevant aspects of the state of the grid and controlling operations of the grid may require the handling of very large amounts of data describing various states in time of that configuration.

Given the vast selection of products that can be stored in an automated storage and retrieval system, and given the many changes (e.g., products are retrieved, storage containers may be displaced) that can occur during dynamic operation the system, known approaches assume that each cell is usually in a unique state or configuration (e.g., in terms of products stored, available space for additional bins, etc.) with respect to every other cell (or most of the other cells) in the system. Accordingly, known methods of maintaining a record of a state of a grid explicitly record all parameters characterising each cell. In very large grids, this translates into burdensome and inefficient data processing and transfer operations.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a first example of raw configuration records according to some implementations;
Fig. 5B shows a second example of raw configuration records according to some implementations;
Fig. 6A shows a first example of encoded configuration records according to some implementations;
Fig. 6B shows a second example of encoded configuration records according to some implementations;
Fig. 7 shows a flowchart of a method for encoding a configuration of a storage grid;
Fig. 8 shows a flowchart of a method for decoding an encoded configuration record; and
Fig. 9 shows an arrangement comprising a frontend and a backend suitable for some implementations described herein.

### DETAILED DESCRIPTION

In overview, the disclosure relates to an approach for reducing data demands when handling an electronic configuration of a storage grid. Different cells (storage volumes) of the grid may, for example, be differently dimensioned/have different contents and thus need to have separate entries in a configuration record - each listing the parameters of the respective cell. However in some cases, such as when a great number of cells are employed, it may be found that multiple cells have parameters in common and so a label that is indicative of the parameters of those cells may be used to avoid the need to repeatedly store their common parameters. This can increase the efficiency of data storage and transfer.

### Automated storage and retrieval system overview

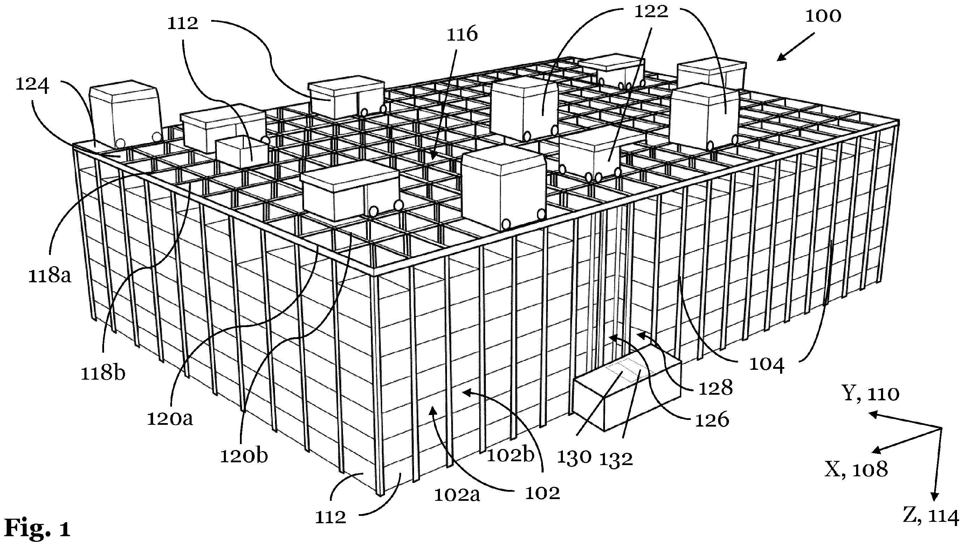

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

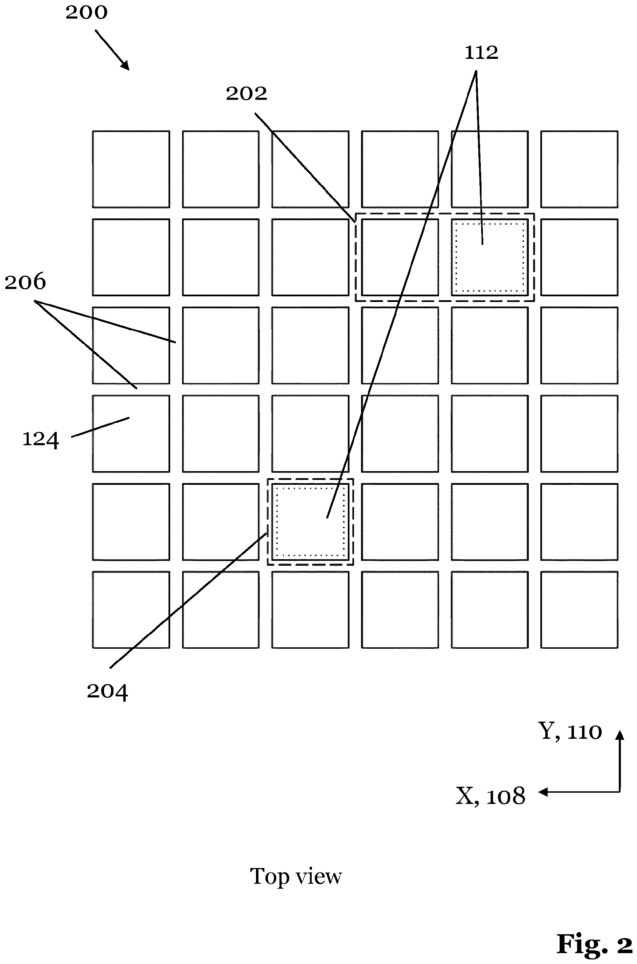

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

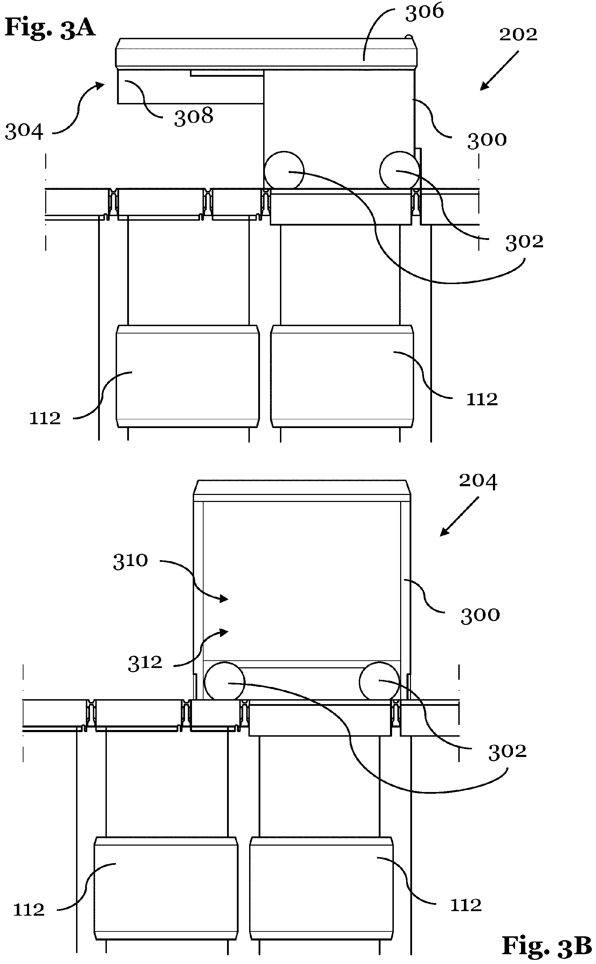

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

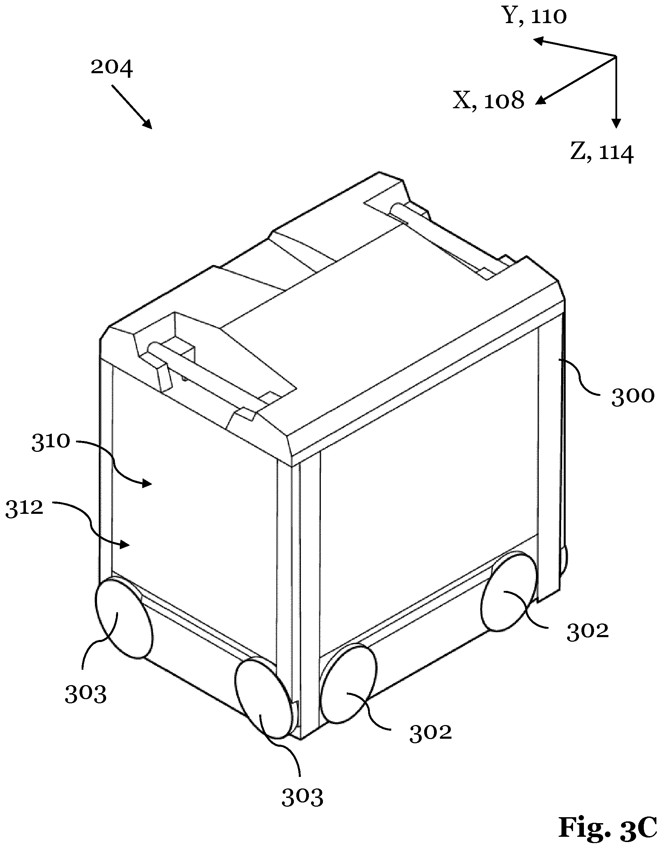

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

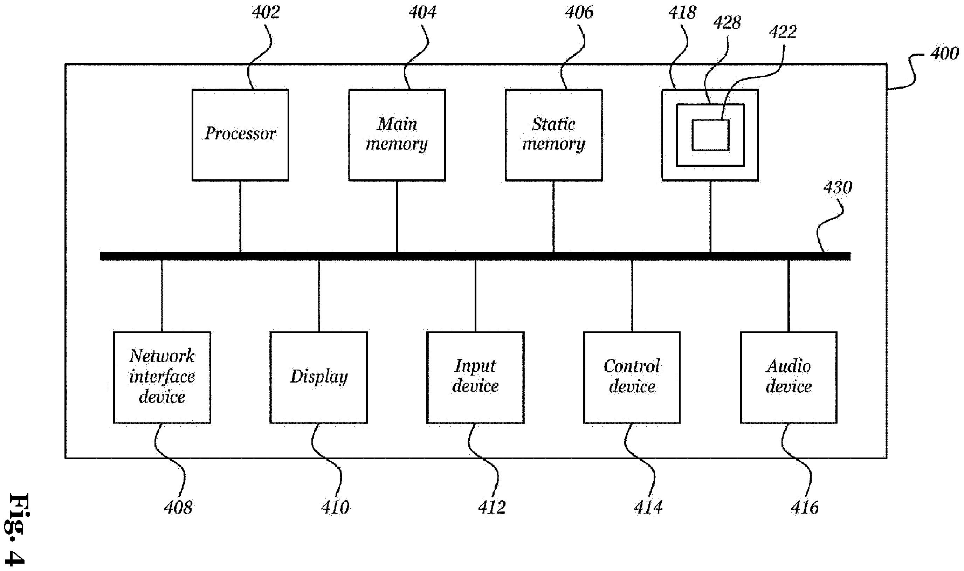

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which maybe marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Repetition of data in the grid

A grid 100 may comprise a large number of vertical columns 102, and each of those vertical columns may comprise several storage spaces (each storage space being for storing a bin 112). A vertical column or a storage space of the storage grid may also be referred to as a "cell", i.e., a cell may be a vertical column 102 of the storage grid or a storage space of the storage grid within a vertical column 102. Given the vast range of products that can be stored in an automated storage and retrieval system, and given the many changes (e.g., products are retrieved, bins maybe displaced) that can occur during dynamic operation the system, it may be assumed that each cell is usually in a unique state or configuration (e.g., in terms of products stored, available space for additional bins, etc.) with respect to every other cell in the system; accordingly a record of a state of a grid may explicitly record all parameters characterising each cell. However, particularly in very large grids, it may be that multiple cells are instead in the same state, e.g., a cell may store the exact same products as several other cells. This repetition may not become apparent in smaller grids, and may be difficult to recognise where the state of a cell mostly, but only partially, matches the state of other cells. The present disclosure recognises said repetition and accordingly proposes maintaining a record or configuration of the state of the grid 100 in a manner that can increase the efficiency of data handling and transfer across the system.

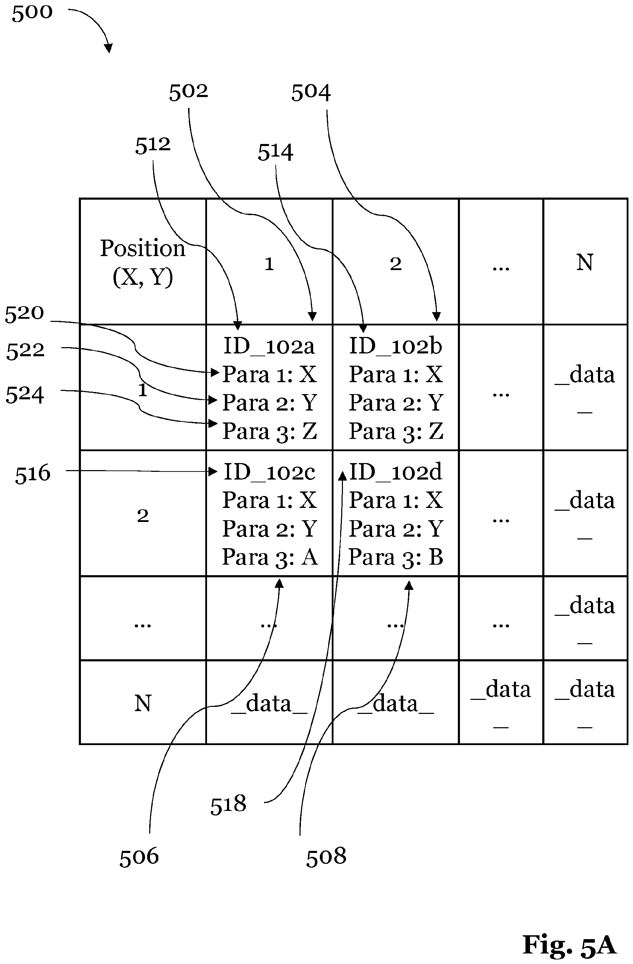

Fig. 5A illustrates an example of the above mentioned repetition for vertical columns 102. The repetition is illustrated for ease of explanation by means of a table, but those skilled in the art will recognise that the same data may be arranged as in a list, in an array, or in any other suitable form and still exhibit the same repetition of data in substance (for example, the data may be stored electronically using an electronic data structure). A configuration 500 of a storage grid 100 of an automated storage and retrieval system may comprise two or more raw configuration records 502, 504, 506, 508. Each raw configuration record corresponds to a respective cell (i.e., vertical column 102) of the storage grid 100. As an example, the two or more raw configuration records may comprise a first raw configuration record 502 characterising a first cell 102a of the storage grid 100 and a second raw configuration record 504 characterising a second cell 102b of the storage grid.

Each raw configuration record may include a first identifier 512, 514, 516, 518 of the respective cell. The first identifier may be positional data, e.g. a position (e.g, X, Y) of the cell 102 in the grid; said positional data may be expressed by means of coordinates. Alternatively, the first identifier may be indicative of a position of a cell in the grid (e.g., an identifier from which a position of the cell may be identified, but which does not directly express the position). Alternatively, in implementations in which the position of the cell is irrelevant or can be disregarded, the first identifier may be a unique identifier for the cell which does not necessarily correspond to any positional data; a position of the cell may still be determined from the identifier if a mapping between unique identifiers and coordinates is stored and can be retrieved. As one possibility, the configuration record may be stored without identifiers and the position of a given raw configuration record's cell may be determined by reference to that raw configuration record's position within a storage file - as may occur when each raw configuration record is of fixed length and/or character delineated and a mapping between the location in the storage file and the cells position is known. In the example of Fig. 5A, the first identifier (identifying in this example a cell representing vertical column, 102a) may be the coordinates (X, Y) = (1,1) of cell 102a. Alternatively, the first identifier may provide an indication of the coordinates of cell 102a indirectly, for example in an identifier constructed using a coordinates to characters mapping of the kind (*X, Y*) → "xy" (e.g., as an identifier of the form "ID...xy", which in the case of cell 102a maybe "ID...11"). The coordinates may then be extracted from this kind of identifier using a mapping from characters to numbers of the kind *char2num*(*"x"*) → *X* Λ *char2num*(*"y"*) → *Y* (which in the case of cell 102a allows coordinates (X, Y) = (1,1) to be recovered). Alternatively, the first identifier may uniquely identify cell 102a, but not its position (e.g., a unique string of the form "ID_i", such as "ID_102a" for cell 102a).

Each raw configuration record may include one or more parameters 520, 522, 524 characterising the respective cell. The one or more parameters characterising the cell may comprise any of: an indication of a number of storage containers or bins 112 currently in the cell; an indication of a number of storage containers that the cell can hold; an indication of a number of storage containers that can be added to the cell on top of a topmost storage container in the cell; an indication of a functional purpose of the cell (e.g., the functional purpose may be "storage of containers", "retrieval of containers", or both); or an indication of the number/type of products stored in the cell. The one or more parameters 520, 522, 524 characterising the respective cell may be assigned a value (e.g., X, Y, Z, A, B, etc.). Alternatively, the value may be a blank value (e.g., NULL), which may, in some implementations, be interpreted as a default value (e.g., D).

In the example of Fig. 5A, the repetition of multiple cells (i.e., vertical columns) which have the same configuration/which are in the same state may be identified, for example, from a parameter 520 (e.g., "Para 1") which has the same value (e.g., "X") in all raw configuration records 502, 504, 506, 508, i.e. for all (or multiple) cells. Repetition of a parameter 524 (e.g., "Para 3") which has the same value (e.g., "Z") only in some raw configuration records may also be identified.

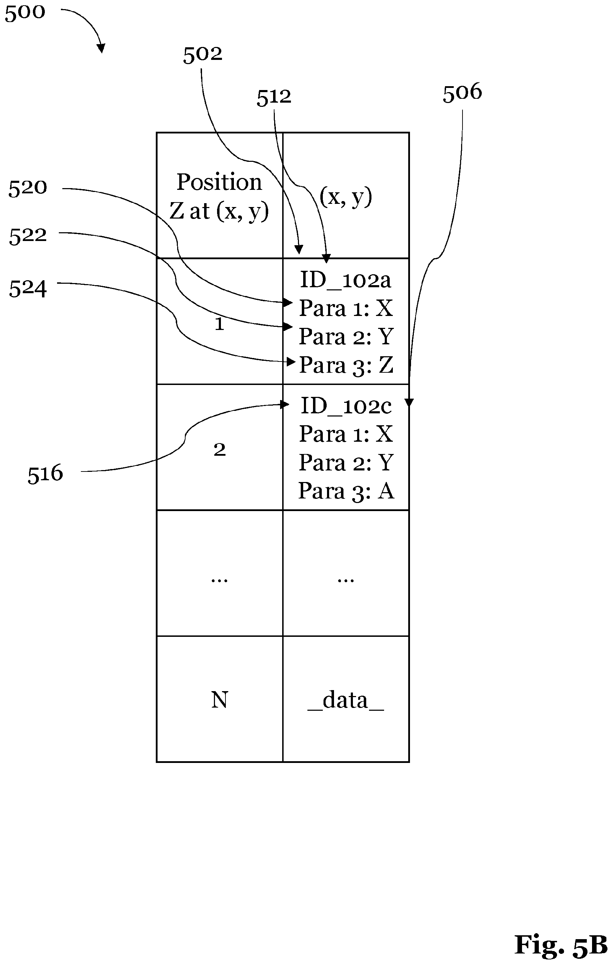

Fig. 5B illustrates an example of the above mentioned repetition but this time in the context of storage spaces. The repetition is essentially the same as that shown in Fig. 5A, but each raw configuration record corresponds to a respective storage space (for a bin 112) rather than to a vertical column 102. In this case, the first identifier may be positional data, e.g. a coordinate indicating a position (e.g, Z in a vertical column 102a at a particular location X=x, Y=y) and may be, with trivial adjustments, of the same kind and form as for a vertical column 102.

The one or more parameters of a first raw configuration record may match, wholly or in part, the one or more parameters of a second raw configuration record. A parameter of a first configuration record may match the same parameter of a second configuration record if the value assigned to the parameter in both records is the same. Referring to Fig. 5A, for example, parameter 520 of configuration record 502 matches parameter 520 of configuration record 504, because both parameters 520 have been assigned the value "X". A parameter of a first configuration record may also match the same parameter of a second configuration record if the value assigned to the parameter in the first configuration record is similar to the value assigned to the parameter in the second configuration record. Similarity may be determined based on both values falling within a same predetermined range. For example, parameter 524 of configuration record 502 may be deemed to match parameter 524 of configuration record 506, because the parameters 520 have been assigned the values "X" and "A", wherein X is similar to A, e.g., because X and A fall withing a same predetermined range *i < X < A < j.*

The one or more parameters of a first raw configuration record may match the one or more parameters of a second raw configuration record only in part, e.g., if a subset of the one or more parameters in the first configuration record matches a corresponding subset of the one or more parameters in the second configuration record. For example, parameters 520 and 522 of configuration record 502 match parameters 520 and 522 of configuration record 508, because these parameters 520, 522 have, respectively, been assigned the values "X" and "Y" in both configuration records. Parameter 524 of configuration record 502 does not match parameter 524 of configuration record 508, because this parameter 524 has been assigned a different value in each record, i.e., "X" and "B", or values that are not both in a same predetermined range, e.g., where *i* < *X* < *j* < *B.* As is explained in more detail below, in some implementations, the one or more parameters do not include all the parameters of the configuration records, i.e., some parameters may be excluded from the one or more parameters (and may in such cases be considered additional parameters), including for the purpose of determining that the one or more parameters of a first raw configuration record match the one or more parameters of a second raw configuration record. In other words, in some cases the one or more parameters may be a single parameter 520, or (at least) two parameters 520, 522, but not all of parameters 520, 522, 524.

It will be appreciated that different schemes to determine whether the one or more parameters of a first raw configuration record match, wholly or in part, the one or more parameters of a second raw configuration record may be applied to the same configuration records, potentially yielding different results. For example, raw configuration records 502, 504, 506, 508 may be considered to match (exactly) based on parameters 520 and 522 if parameter 524 is disregarded, and considered not to match (neither exactly, nor by virtue of having parameters with similar values) if parameter 524 is considered. Those skilled in the art will have no difficulty in determining which scheme is most appropriate to each application of the approaches disclosed herein.

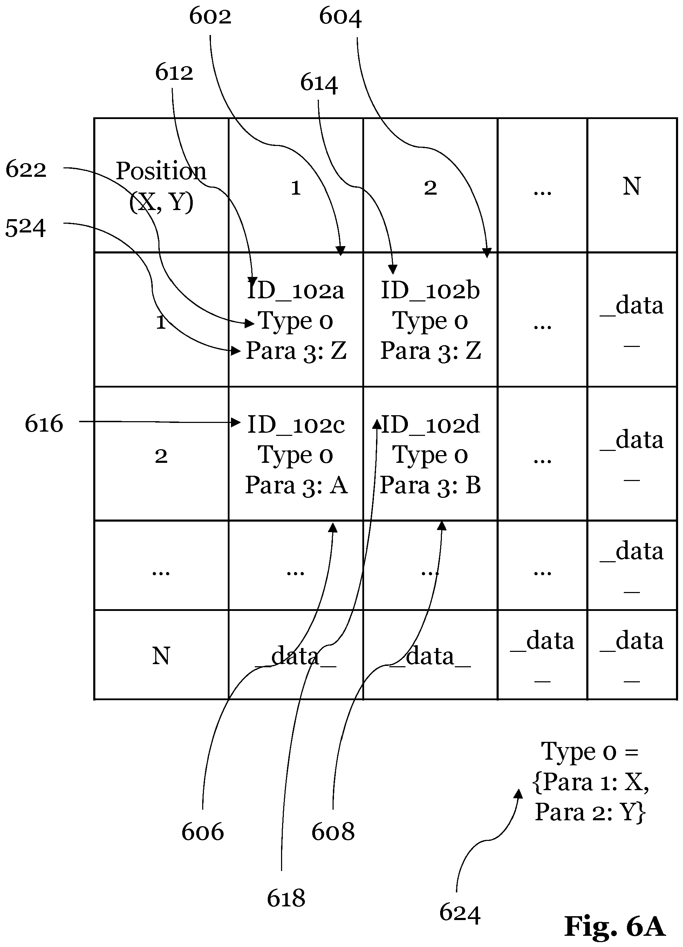

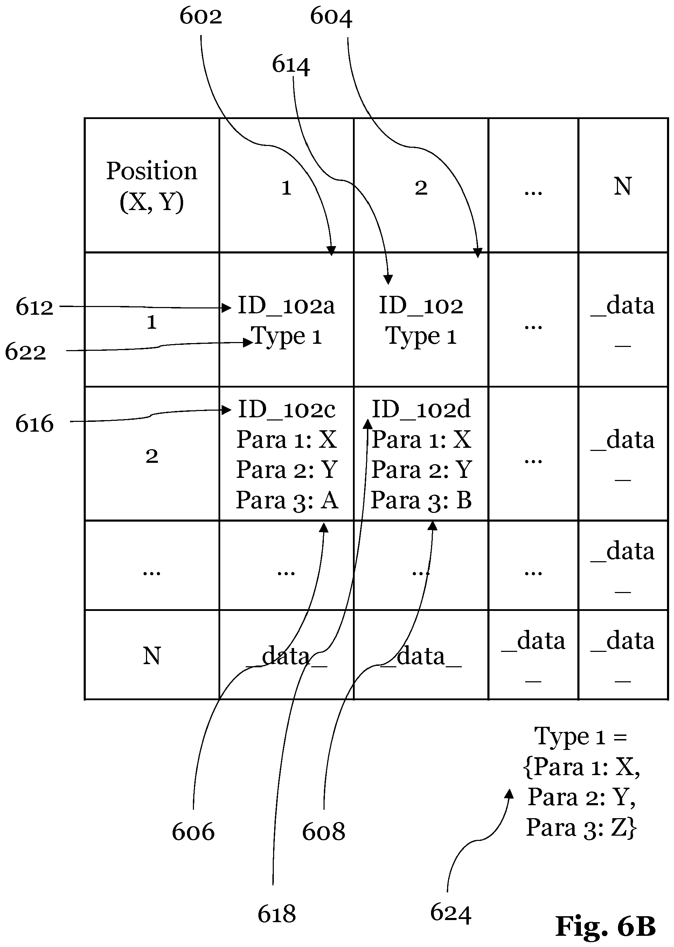

As shown in Fig. 6A and Fig. 6B, when the one or more parameters 520, 522, 524 of a first raw configuration record 502 match, wholly or in part, the one or more parameters of a second raw configuration record 504, a cell type (as may be represented by a cell type identifier 622) may be associated with each of the first and second raw configuration records (for example raw configuration records 502, and 506). The process of matching parameters of records and assigning cell types may be repeated for two or more raw configuration records 502, 504, 506, 508. A cell type identifier 622 may be any type identifier that corresponds to the one or more matching parameters of the first and second raw configuration records 502, 506. For example, raw configuration records 502, 504, 506, 508 may all be assigned a first cell type represented by the cell type identifier 622 "Type o" based on their parameters 520, 522 having been assigned the same values (X and Y), i.e., based on the mapping *Para* 1 = *X, Para* 2 = *Y* → *Type* 0. As another example, configuration records 502, 504 may all be assigned a second cell type represented by the cell type identifier 622 "Type 1" based on their parameters 520, 522, 524 having been assigned the same values (X, Y, Z), i.e., based on the mapping *Para* 1 = *X, Para* 2 = *Y, Para* 3 = *Z* → *Type* 1*.*

### Structures for encoding the configuration of the grid

Having recognised the presence of the above mentioned repetition in the configuration 500 of a storage grid 100, the approaches described herein allow said configuration of the storage grid to be encoded. As shown in Fig. 6A and Fig. 6B a configuration of the storage grid may be encoded by creating encoded configuration records 602, 604, 606, 608 corresponding to cells 102 of the storage grid; for example, by creating for the first cell 102a and second cell 102b respective first 502 and second 504 encoded configuration records. Each encoded configuration record 602, 604, 606, 608 may comprise (or, in some implementations, consist of) the cell type identifier 622 representing the cell type associated with the raw configuration record 502, 504, 506, 508 and thus characterising the respective cell. In implementations in which it is advantageous to be able to identify the cell to which an encoded configuration record corresponds (e.g., where the position of the cell is relevant), each encoded configuration record 602, 604, 606, 608 may comprise (or, in some implementations, consist of) a second identifier 612, 614, 616, 618 of the respective cell and the cell type identifier 622 representing the cell type associated with the raw configuration record 502, 504, 506, 508 and characterising the respective cell.

The second identifier 612, 614, 616, 618 may be the first identifier 512, 514, 516, 518 described above or a different identifier. If the second identifier 612, 614, 616, 618 is a different identifier, if may be based on the first identifier and, optionally, the first identifier may be obtained from the second identifier. For example, the first identifier (identifying cell, i.e. vertical column, 102a) may be the coordinates (X, Y) = (1, 1) of cell 102a, and the second identifier may provide an indication of the coordinates of cell 102a indirectly (e.g., it may be of the form "ID...xy" or "ID_102a" discussed above). As yet another alternative, the second identifier may be an order of the encoded configuration records from which cells may be identified (e.g., an index of a list of the encoded configuration records), such that the second identifier need not be explicitly included in the encoded configuration records.

A cell type represented by a cell type identifier 622 may be described by a cell type descriptor 624 which encodes the matching one or more parameters 520, 522, 524 of the first and second raw configuration records 502, 504. The cell type descriptor 624 may be stored and communicated with the encoded data records 602, 604, 606, 608, such that, the one or more parameters 520, 522, 524 characterising the cell 102 may be recovered or obtained from the cell type descriptor 624. In other words, an explanation of the cell type identifier 622 in the form of a cell type descriptor 624 may be included/saved with/accompany the encoded configuration records, to allow decoding of the one or more parameters 520, 522, 524; alternatively, the cell type may be a standard cell type which can represented by a standard cell type identifier 622 and for which a cell type descriptor is already known to both an encoding entity (e.g., frontend environment 902 described below) and a decoding entity (e.g., a backend server 904 described below), such that a cell type descriptor 624 need not be included with/accompany the encoded configuration records in order for the decoding to be possible; alternatively, the cell type descriptor 624 may be stored in a database from which it can be retrieved by the decoding entity.

Those skilled in the art will recognise that the cell type identifier 622 and the cell type descriptor 624 are preferably encoded such that the memory size required for storing the cell type identifier and/or cell type descriptor for all the encoded data records 602, 604, 606, 608 is less than the memory size required for storing the one or more parameters 520, 522, 524 for all the raw data records 602, 604, 606, 608. Similarly, cell type identifier 622 and cell type descriptor 624 are preferably encoded such that, in a data transfer, the size of the data transferred to communicate the cell type identifier and/or cell type descriptor is less than the size of the data transferred to communicate the one or more parameters 520, 522, 524. Although advantageous, this is not necessary in every implementation. For example, visualising a grid based on an encoded configuration does not necessarily require memory usage or data transfers to be reduced, condensing information using cell types identifiers 622 and cell type descriptors 624 being advantageous per se in such implementations.

Referring to Fig. 6A, for example, raw configuration records 502, 504, 506, 508 may all have been assigned the a first cell type (represented by cell type identifier 622 "Type 0") based on their parameters 520, 522 having been assigned the same values (X and Y). The encoded configuration records 602, 604, 606, 608 corresponding respectively to raw configuration records 502, 504, 506, 508 may therefore be accompanied by the same cell type descriptor 624 "Type o {Para 1: X, Para 2: Y}". Parameter 524 may be included as additional (non-encoded) parameter in each of encoded configuration records 602, 604, 606, 608; alternatively, parameter 524 may be excluded from the encoded configuration records. Referring to Fig. 6B, as another example, raw configuration records 502, 504 may have been assigned a second cell type (represented by the cell type identifier 622 "Type 1") based on their parameters 520, 522, 524 having been assigned the same values (X, Y, and Z). The encoded configuration records 602, 604 corresponding to raw configuration records 502, 504 may therefore be accompanied by the same cell type descriptor 624 "Type 1 {Para 1: X, Para 2: Y, Para 3: Z}". Raw configuration records 506 and 508 may be included as additional non-encoded configuration records 606, 608; alternatively, raw configuration records 506 and 508 may be excluded from the encoded configuration records.

It will be appreciated that multiple cell types may be associated with each cell 102 and that accordingly the encoded configuration records 602, 604, 606, 608 may include a plurality of cell type identifiers 622 and be accompanied by a plurality of cell type descriptors 624.

### Method of encoding the configuration of the grid

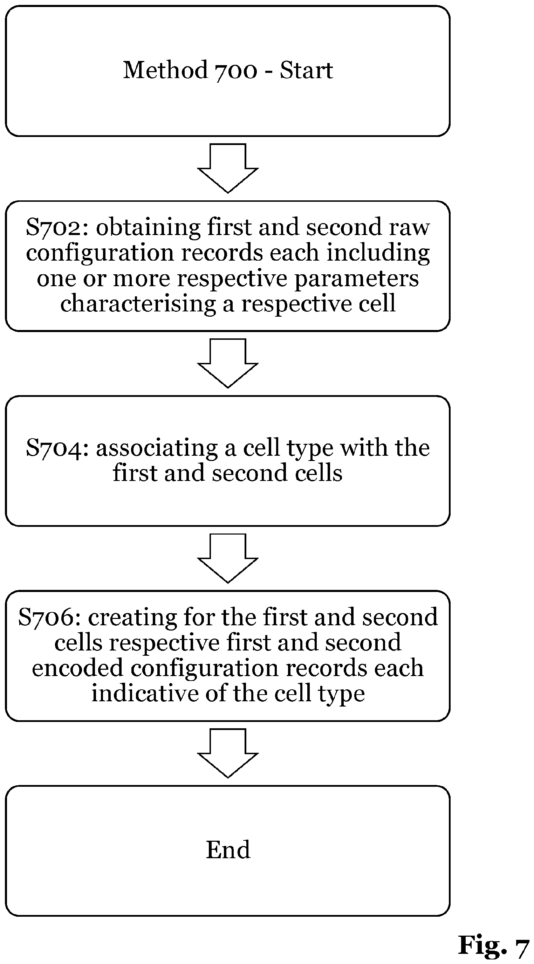

The structures described above with reference to Fig. 5A, Fig. 5B, Fig. 6A, and Fig.6B may be employed in a computer-implemented method 700 for encoding a configuration 500 of a storage grid 100 of an automated storage and retrieval system. Referring to Fig. 7, the method 700 may comprise steps 702 to 706, described in more detail below. The method 700 may be performed by processing system 400.

At step 702, a first raw configuration record 502 and a second raw configuration record 504 may be obtained, corresponding to respective first 102a and second 102b cells of the storage grid 100 and each including one or more respective parameters 520, 522, 524 characterising the respective cell. More generally, two or more raw configuration records 502, 504, 506, 508 may be obtained, each corresponding to a respective cell 102 of the storage grid 100 and each including one or more parameters 520, 522, 524 characterising the respective cell. Raw configuration records may include a first identifier 512, 514, 516, 518 of the respective cell. In some implementations, the raw configuration records 502, 504, 506, 508 may be already available in a memory of processing system 400, i.e., obtaining the raw configuration records comprises fetching from said memory of processing system 400 the raw configuration records.

Optionally, obtaining the first 502 and second 504 raw configuration records (and, more generally, the two or more raw configuration records 502, 504, 506, 508) may comprise receiving the raw configuration records in a frontend environment 902.

At step 704, based on the one or more parameters 520, 522, 524 of the first raw configuration record 502 matching the one or more parameters 520, 522, 524 of the second raw configuration record 504, a cell type may be associated with the first and second cells, and/or with each of the first and second raw configuration records. In other words, it may be determined that the one or more parameters 520, 522, 524 of a first raw configuration record 502 match, wholly or in part, the one or more parameters 520, 522, 524 of a second raw configuration record 504; then, a cell type may be associated with each of the first and second raw configuration records, based on that determination.

As discussed above, a parameter 520 of a first configuration record 502 may match the same parameter 520 in a second configuration record 504 if the value assigned to the parameter 520 in both records is the same. A parameter 524 of a first configuration record 502 may also match the same parameter 524 in a second configuration record 506 if the value assigned to the parameter 524 in the first configuration record is similar to the value assigned to the parameter 524 in the second configuration record. Similarity may be determined based on both values 524 falling within a same predetermined range.

The one or more parameters 520, 522, 524 of a first raw configuration record 502 may match the one or more parameters of a second raw configuration record 508 only in part, e.g., if a subset 520, 522 of the one or more parameters 520, 522, 524 in the first configuration record matches a corresponding subset 520, 522 of the one or more parameters in the second configuration record. For example, parameters 520 and 522 of configuration record 502 match parameters 520 and 522 of configuration record 508, because these parameters 520, 522 have, respectively, been assigned the same values in both configuration records, but parameter 524 of configuration record 502 does not match parameter 524 of configuration record 508, because this parameter 524 has been assigned a different value in each record. Therefore, optionally, the raw configuration records 502, 504, 506, 508 may include one or more additional parameters 524 characterising the respective cell 102 which are not encoded (see step 706 below) in encoded configuration records.

At step 706, respective first 602 and second 604 encoded configuration records each indicative of the cell type (e.g., including a cell type identifier 622 representing the cell type) may be created for the first 102a and second 102b cells, yielding an encoded configuration 500 of the storage grid. More generally, the configuration 500 of the storage grid may be encoded into at least two encoded configuration records 602, 604, 606, 608 corresponding to at least the first and second cells 102a, 102b of the storage grid 100. Each encoded configuration record 602, 604, 606, 608 may comprise (or, in some implementations, consist of) the cell type identifier 622 representing the cell type associated with the raw configuration record 502, 504, 506, 508 characterising the respective cell. In implementations in which it is advantageous to be able to identify the cell to which an encoded configuration record corresponds (e.g., where the position of the cell is relevant), each encoded configuration record 602, 604, 606, 608 may comprise (or, in some implementations, consist of) a second identifier 612, 614, 616, 618 of the respective cell and the cell type identifier 622 representing the cell type associated with the raw configuration record 502, 504, 506, 508 characterising the respective cell. Optionally, creating for the first and second cells respective first and second encoded configuration records (i.e., encoding the configuration of the storage grid) may further comprise encoding the matching one or more parameters of the first and second raw configuration records into a cell type descriptor 624, which may be stored and communicated with the encoded data records 602, 604, 606, 608.

As explained above, the method 700 may be performed by a processing system 400. Instructions 422 for performing the method may be performed by a processor 402 of the processing system 400 and may be stored by any memory 404, 406, 418 of the system. The raw configuration records 502, 504, 506, 508 and/or encoded configuration records 602, 604, 606, 608 may be stored by any memory 404, 406, 418 of the processing system 400 and/or received/transmitted via, e.g., a network interface 408.

As an example, the encoded configuration of the storage grid (i.e., the encoded configuration records 602, 604, 606, 608) maybe stored in a log file, optionally in any memory 404, 406, 418 of the processing system 400. The log file may have a standard format to enable to log file to be exchanged with a designer, operator, distributor, or client of the storage and retrieval system. The log file may comprise time-ordered states of the storage grid 100, e.g., for use in controlling/monitoring the operation of storage grid 100. Alternatively, the log file may comprise a design of the storage grid. The log file may be created from the encoded configuration and that may be performed at a backend server. This facilitates direct transfer of the log file to other servers and also facilitates migration of future software initiatives - such as the creation of a new frontend web simulator without needing it to rely on/create the log. It can also force software functions necessary to create the log onto the backend - thereby further securing the log system.

### Decoding the configuration of the grid

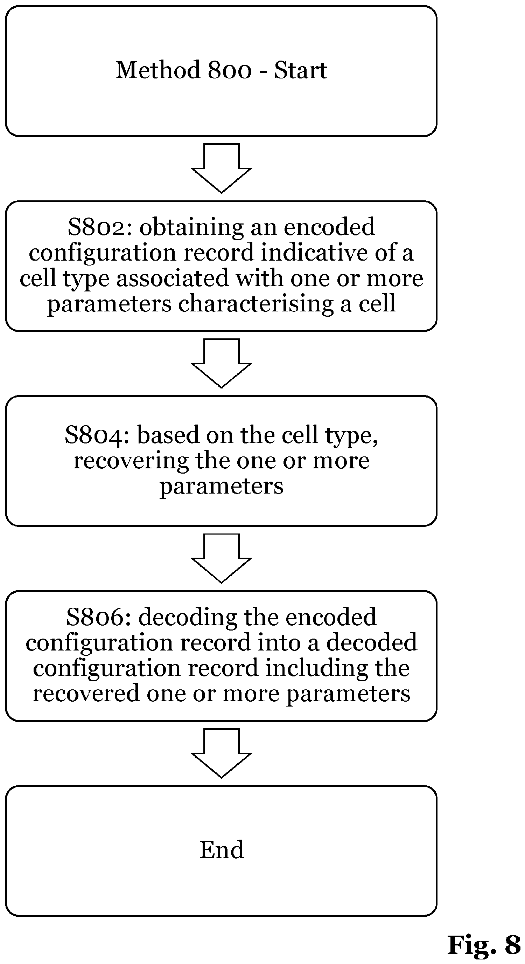

A computer-implemented method 800 for decoding a configuration 500 of a storage grid 100 of an automated storage and retrieval system may correspond to the above computer-implemented method 700 of encoding a configuration 500 of a storage grid 100 of an automated storage and retrieval system. Referring to Fig. 8, the method 800 may comprise steps 802 to 806, described in more detail below. The method 800 may be performed by processing system 400.

At step 802, an encoded configuration record 602 maybe obtained. Said encoded configuration record 602 may correspond to a cell 102a of the storage grid 100 and be indicative of a cell type (e.g., including a cell type identifier 622 representing the cell type) associated with one or more parameters 520, 522, 524 characterising the cell. The encoded configuration record 602 may comprise (or, in some implementations, consist of) a cell type identifier 622 representing the cell type associated with one or more parameters 520, 522, 524 characterising the cell. The cell type may be described in a cell type descriptor 624. In implementations in which it is advantageous to be able to identify the cell to which an encoded configuration record corresponds (e.g., where the position of the cell is relevant), the configuration record 602 may comprise (or, in some implementations, consist of) a first identifier 612 of the cell and/or a cell type identifier 622 representing the cell type associated with one or more parameters 520, 522, 524 characterising the cell. The cell type may be described in a cell type descriptor 624. Obtaining the encoded configuration record 602 may comprise receiving the encoded configuration record from a backend server 908.

At step 804, based on the cell type (e.g., based on cell type identifier 622), the one or more parameters 520, 522, 524 may be recovered. Recovering the one or more parameters characterising the cell may comprise obtaining the one or more parameters from a cell type descriptor 624 which encodes the one or more parameters 520, 522, 524 as described above.

At step 806, the encoded configuration record 602 maybe decoded into a decoded configuration record 502 corresponding to the cell 102a. The decoded configuration record may be the same as one of the raw configuration records 502, 504, 506, 508, described above in relation to encoding method 700 (e.g., where decoding method 800 is implemented to yield decoded records having the same format as the raw configuration records 502, 504, 506, 508). The decoded configuration record may include a second identifier 512 of the cell and the recovered one or more parameters 520, 522, 524 characterising the cell.

As explained above, the method 800 may be performed by a processing system 400. Instructions 422 for performing the method may be performed by a processor 402 of the processing system 400 and may be stored by any memory 404, 406, 418 of the system. The decoded configuration record 502 and/or encoded configuration record 602 may be stored by any memory 404, 406, 418 of the processing system 400 and/or received/transmitted via, e.g., a network interface 408.

The decoding method 800 need not be performed in implementations in which it is not necessary to recover raw configuration records 502, 504, 506, 508 from encoded configuration records 602, 604, 606, 608. For example, when generating a list of materials (as described below), the information in encoded configuration records 602, 604, 606, 608 may be sufficient, and the decoding method 800 may be avoided.

### Frontend and backend

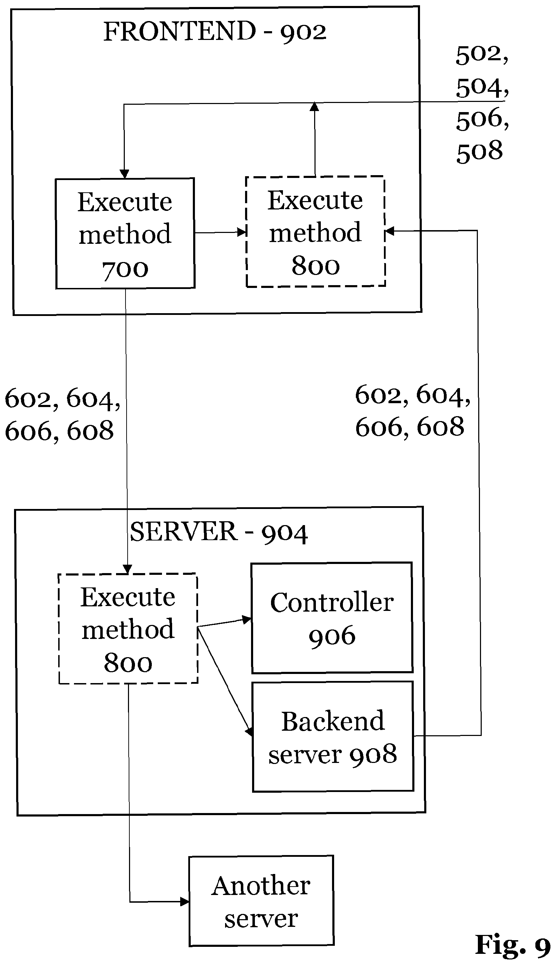

Fig. 9, shows a system comprising a frontend environment 902 and at least one server 904 of the automated storage and retrieval system. The server 904 may be or may comprise a controller 906 and/or a backend server 908 of the automated storage and retrieval system. The frontend environment 902 may be in communication with the at least one server 904, such that encoded configuration records may be transmitted between the frontend environment 902 and the at least one server 904.

Each of the front end environment, the server 904, the controller 906 and/or the backend server 908 may be implemented by the processing system 400 described with reference to Fig. 4. The frontend environment 902 may be a device or system 400 executing (or controlling) a desktop or web application (e.g., a planning application to plan an automated storage and retrieval system or a control application to control an automated storage and retrieval system). The at least one server 904 and the backend server 908 may be servers of a manufacturer/distributor of automated storage and retrieval systems. The controller 906 may be a controller in communication with the automated storage and retrieval system and configured to control it.

### Decoding in the frontend and backend

As shown in Fig. 9, the decoding method 800 may be performed in any of a frontend environment 902, in a server 904, in a controller 906, or in a backend server 908 of the automated storage and retrieval system. The decoding method 800 may additionally comprise sending the decoded configuration record (which may be the same as raw configuration record 502) to at least one other server. It will be apparent to those skilled in the art that the method 800 can be performed wherever it is necessary or desirable to recover a decoded configuration record from an encoded configuration record 602.

### Controlling operations based on an encoded configuration

As shown in Fig. 9, the encoding method 700 may be performed in a frontend environment 902 of the automated storage and retrieval system. The encoded configuration of the storage grid (i.e., encoded data records 602, 604, 606, 608) maybe sent to at least one server 904 from the frontend environment. Performing method 700 in the frontend environment reduces the amount of data that needs to be transferred to server 904. For example, in an implementation suitable for the operational phase of the automated storage and retrieval system, the at least one server 904 may comprise a controller 906 configured to control operation of the automated storage and retrieval system based on the encoded configuration of the storage grid and/or a backend server 908 of the automated storage and retrieval system configured to communicate with the controller 906. In this way, operation of the automated storage and retrieval system may be controlled from the frontend environment 902 with a reduced need for data transmission between said frontend environment and the controller 906 and/or backend server 908.

Accordingly, in some implementations, operation of the automated storage and retrieval system may be controlled based on the encoded configuration of the storage grid (i.e., encoded data records 602, 604, 606, 608). The controlling may comprise controlling operation of a robotic vehicle 122 of the automated storage and retrieval system, the controlling of the operation of the robotic vehicle comprising controlling the robotic vehicle to store a container or bin 112 in, or retrieve a container from, a cell 102 that is selected based on the encoded configuration of the storage grid.

### Designing and visualising a grid based on an encoded configuration

Repetition of a state or configuration of a cell is even more likely in a plan of a storage system (e.g., the plan of the structure of the system, before storing any products or bins). In the planning phase for a new storage system or for an upgrade of an existing storage system, a large number or identically designed cells may be added to the plan. Therefore, the approaches described herein are even more advantageous when used by distributors and planners of automated storage and retrieval systems.

Referring again to Fig. 9, the encoding method 700 may be performed in a frontend environment 902 of the automated storage and retrieval system. The encoded configuration of the storage grid (i.e., encoded data records 602, 604, 606, 608) maybe sent to at least one server 904 from the frontend environment. Performing method 700 in the frontend environment reduces the amount of data that needs to be transferred to server 904. As an example, a distributor planning an automated storage and retrieval system for a client can design the system in the frontend environment and efficiently (i.e., with a smaller data transfer) send it to a server of a manufacturer.

Accordingly, in some implementations, the encoding method 700 may further include generating, in a frontend environment 902 of the automated storage and retrieval system, a list (e.g., a bill) of materials for construction of the automated storage and retrieval system, based on the encoded configuration of the storage grid.

It will also be recognised that the approaches described herein can advantageously be employed in the creation of visualisation software for the storage and retrieval system, for example for creating visualisations to be displayed on a display 410 of a frontend environment. Indeed, in a visualisation, similar states of a cell may be represented in the same way (e.g., a column at 80% capacity for bins may be represented in the same way as a column at 85% capacity for bins, e.g., shown in the same, red colour).

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A computer-implemented method for encoding a configuration of/for a storage grid of an automated storage and retrieval system, the method comprising:
obtaining first and second raw configuration records corresponding to respective first and second cells of the storage grid and each including one or more respective parameters characterising the respective cell;
based on the one or more parameters of the first raw configuration record matching the one or more parameters of the second raw configuration record, associating a cell type with the first and second cells; and
creating for the first and second cells respective first and second encoded configuration records each indicative of the cell type.

2. The method of any preceding claim, wherein each encoded configuration record includes a cell type identifier representing the cell type.

3. The method of claim 1, wherein one or more of:
each raw configuration record includes a first identifier of the respective cell, optionally wherein the first identifier provides an indication of the position of the respective cell; and/or
each encoded configuration record includes a second identifier of the respective cell, optionally wherein one or more of:
the second identifier provides an indication of the position of the respective cell; and/or
the first and second identifiers for each cell are the same.

4. The method of any preceding claim, wherein the method is performed in a frontend environment of the automated storage and retrieval system.

5. The method of claim 4, further comprising:
sending from the frontend environment the first and second encoded configuration records to at least one server, optionally wherein the at least one server comprises a controller configured to control operation of the automated storage and retrieval system based on the first and second encoded configuration records and/or a backend server of the automated storage and retrieval system configured to communicate with the controller.

6. The method of any preceding claim, further comprising one or more of:
generating, based on the encoded configuration records, a list of materials for construction of the automated storage and retrieval system; and/or
storing the encoded configuration records in a log file.

7. The method of any preceding claim, wherein each raw configuration record includes one or more additional parameters further characterising the respective cell.

8. The method of any preceding claim further comprising:
controlling operation of the automated storage and retrieval system based on at least one of the encoded configuration records,
optionally, wherein the controlling comprises controlling operation of a robotic vehicle of the automated storage and retrieval system,
further optionally, wherein the controlling of the operation of the robotic vehicle comprises controlling the robotic vehicle to store a container in, or retrieve a container from, a cell that is selected based on the at least one encoded configuration record.

9. A computer-implemented method for decoding a configuration of/for a storage grid of an automated storage and retrieval system, the method comprising:
obtaining an encoded configuration record corresponding to a cell of the storage grid and indicative of a cell type associated with one or more parameters characterising the cell;
based on the cell type, recovering the one or more parameters; and
decoding the encoded configuration record into a decoded configuration record corresponding to the cell, wherein the decoded configuration record includes the recovered one or more parameters.

10. The method of claim 9, wherein one or more of:
the encoded configuration record includes a first identifier of the cell, optionally wherein the first identifier provides an indication of the position of the cell;
the decoded configuration record comprises a second identifier of the cell, optionally wherein one or more of:
the second identifier provides an indication of the position of the cell; and/or
the first and second identifiers for each cell are the same; and/or
recovering the one or more parameters comprises obtaining the one or more parameters using a cell type descriptor of the encoded configuration record.

11. The method of any of claims 9 to 10, wherein one or more:
the method is performed in a frontend environment or in a backend server of the automated storage and retrieval system, optionally the method further comprising sending the decoded configuration record to at least one other server; and/or
obtaining the encoded configuration record comprises receiving the encoded configuration record from a backend server.

12. The method of any of claims 9 to 11, further comprising:
controlling operation of the automated storage and retrieval system based on the decoded configuration record,
optionally, wherein the controlling comprises controlling operation of a robotic vehicle of the automated storage and retrieval system,
further optionally, wherein the controlling of the operation of the robotic vehicle comprises controlling the robotic vehicle to store a container in, or retrieve a container from, a cell that is selected based on the at least one decoded configuration record.

13. The method of any preceding claim, wherein the one or more parameters characterising the cell comprise at least one of:
an indication of a number of storage containers currently in the cell;
an indication of a number of storage containers that the cell can hold;
an indication of a number of storage containers that can be added to the cell on top of a topmost storage container in the cell;
an indication of a functional purpose of the cell, optionally wherein the functional purpose is storage of containers, retrieval of containers, or both.

14. A device or system configured to perform the method of any preceding claim.

15. One or more computer-readable media comprising instructions which, when executed by a processor of a device, cause the device to perform the method of any of claims 1 to 13.
